# EUROPEAN PATENT APPLICATION

(11) **EP 3 564 884 A1**
(43) Date of publication of application: **06.11.2019**
(21) Application number: 19162610.0
(22) Date of filing: 13.03.2019
(51) Int. Cl.: G06Q 20/22

(54) **METHOD AND SYSTEM FOR VERIFYING POLICY COMPLIANCE OF TRANSACTIONS IN A BLOCKCHAIN EXECUTING SMART CONTRACTS**

(30) Priority: 28.03.2018 US 201815937895
(71) Applicant: NEC Laboratories Europe GmbH, 69115 Heidelberg (DE)
(72) Inventor: Klaedtke, Felix, 69117 Heidelberg (DE)
(74) Representative: Patent- und Rechtsanwälte Ullrich & Naumann

(57) **Abstract**

A method for enforcing policy compliance of a smart contract in a blockchain network includes a blockchain node receiving a transaction and a transaction policy associated with the transaction, where the transaction includes the smart contract and a first state. The blockchain also determines a second state of the transaction based upon executing the transaction according to the smart contract and the first state, and determines whether the transaction complies with the transaction policy. If the transaction complies with the transaction policy, the second state is incorporated by the blockchain node into a new block of blockchain of the blockchain network. If the transaction does not comply with the transaction policy, the first state is incorporated by the blockchain node into the new block.

## Description

### FIELD

The present invention relates to a method and system for verifying policy compliance of transactions in a blockchain executing smart contracts.

### BACKGROUND

Distributed ledger (DL) systems are a type of distributed database management system that allow for data (e.g., a digital ledger including transactions and metadata) to be recorded, shared, and synchronized across a distributed network of different network participants (e.g., nodes). A blockchain is a particular type of data structure used in some DL systems that facilitates the storage and distribution of data in packages called "blocks" that are digitally connected to each other in a "chain." Blockchain technology provides a decentralized, open, Byzantine fault-tolerant transaction mechanism.

DL systems, particularly those using blockchain technology, are becoming common for various types of Internet interactions, including anonymous online payments, remittance, and the transaction of digital assets (e.g., digital currencies). Cryptocurrencies (a type of digital currency), such as those provided by the Bitcoin, Litecoin, Dogecoin, or Ethereum platforms, are well-recognized examples of DL systems implemented with blockchain technology.

A DL (e.g., a DL of a platform like Ethereum) may store the states of all its agents (e.g., "users"). An agent state can include the agent's assets in some cryptocurrency. Agents can submit transactions, which result in state updates when executed. An example of such a transaction could be to transfer a specified amount in some cryptocurrency from Alice, which is the agent submitting this transaction, to the agent Bob. The execution of this transaction results in updating the DL, that is Alice's account balance is reduced by the specified amount and Bob's account balance is increased by the specified amount.

In DL systems, more complex transactions can involve smart contracts. Smart contracts may be implemented as computer programs intended to digitally facilitate, verify, or enforce the negotiation or performance of a contract between agents. For example, Alice may submit a transaction to a smart contract that conditions the execution of the transaction on the vote count in a specified poll. This smart contract may in turn trigger another smart contract based on whether a certain vote threshold is reached. When executing the transaction, the DL is updated according to the smart contracts.

The DL of a platform implementing smart contracts (e.g., Ethereum) may store the states of the platform's smart contracts as well as agents' states. Agents' states may also include a state of a smart contract and values assigned to the smart contract's variables.

Smart contracts can execute transactions originating from the agents on a DL (e.g., a blockchain-based distributed computing platform) without the involvement of a centralized authority. DL systems may use dedicated high-level programming languages for smart contracts. For example, smart contracts of the public and opensource platform Ethereum can be written in the Solidity programming language, which can be compiled to byte code and executed by an Ethereum Virtual Machine (EVM). "A Next-Generation Smart Contract and Decentralized Application Platform" (available at <<https://github.com/ethereum/wiki/wiki/White-Paper>>) is a white paper discussing blockchains, smart contracts, and Ethereum, the entirety of which is incorporated by reference herein.

### SUMMARY

In an embodiment, the present invention provides a method for enforcing policy compliance of a smart contract in a blockchain network. The method includes a blockchain node receiving a transaction and a transaction policy associated with the transaction, where the transaction includes the smart contract and a first state. The blockchain also determines a second state of the transaction based upon executing the transaction according to the smart contract and the first state, and determines whether the transaction complies with the transaction policy. If the transaction complies with the transaction policy, the second state is incorporated by the blockchain node into a new block of blockchain of the blockchain network. If the transaction does not comply with the transaction policy, the first state is incorporated by the blockchain node into the new block.

### BRIEF DESCRIPTION OF THE DRAWINGS

The present invention will be described in even greater detail below based on the exemplary figures. The invention is not limited to the exemplary embodiments. All features described and/or illustrated herein can be used alone or combined in different combinations in embodiments of the invention. The features and advantages of various embodiments of the present invention will become apparent by reading the following detailed description with reference to the attached drawings which illustrate the following:
FIG. 1 illustrates a blockchain according to an embodiment;
FIG. 2 illustrates a distributed ledger system for exchanging distributed ledger data according to an embodiment;
FIG. 3 illustrates a graphical representation of a finite-state machine for a transaction policy according to an embodiment;
FIG. 4 illustrates a distributed ledger system having a trustworthy component according to an embodiment;
FIG. 5 illustrates a method for checking compliance of smart contracts in a blockchain according to an embodiment;
FIG. 6 illustrates a method for checking compliance of smart contracts in a blockchain according to an embodiment having a secure enclave; and
FIG. 7 is a block diagram of a processing system according to an embodiment.

### DETAILED DESCRIPTION

Smart contracts should be executed correctly to ensure their effectiveness. Indeed, it is important that smart contracts work as intended as they often manage and store a large amount of money from different agents. However, writing smart contracts is error prone, and executing transactions by a buggy or vulnerable smart contract may result in a significant loss to the agents. Unwanted transaction results for an agent may also originate from the order in which transactions are executed. For example, the outcome of an agent's transaction may depend on a value determined by a smart contract's state variable, which could be accidentally or maliciously be updated by executing the transaction from another agent first. However, agents cannot presently enforce the execution order. Nor can agents enforce requirements for when the execution of their submitted transactions should be aborted and when it is safe to execute them.

Loi Luu, et. al., "Making Smart Contracts Smarter" (CCS 2016, pp. 254-269) ("Luu") provides a general description of how smart contracts can be implemented in DL systems, particularly Ethereum, and points out some security considerations associated with running smart contracts in open DL systems. For example, Luu describes how open DL networks are vulnerable to manipulation by arbitrary adversaries (*id.* 254) and how security bugs can allow malicious miners to exploit the DL system (*id.* 257-259). Luu also proposes that some properties about smart contracts can be checked statically prior to the contract's deployment (*see id.* 261), but discourages dynamic testing. Luu also proposes the tool Oyente that finds known security bugs in smart contracts using "symbolic execution" (*id.* 262-263). Oyente's use is limited to the patterns that are implemented in the tool and agents do not have the flexibility to create their own policies (*See id*.). The entire disclosure of Luu is hereby incorporated by reference herein.

U.S. Patent Pub. No. 2015/0324787, "Policy-Based Control and Augmentation of Cryptocurrencies and Cryptocurrency Security, to Daniel Schaffner ("Schaffner") discusses a system for policy-based control and augmentation of cryptocurrency security including policy rules that govern transactions that are embedded in the cryptocurrency transmission (*id.* Abstract). Schaffner discusses mechanisms similar to those in Luu, where simple policies are checked before transactions are executed. The entire disclosure of Schaffner is hereby incorporated by reference herein.

Xiwei Xu, et. al, "The Blockchain as a Software Connector" (IEEE/IPFS Conference on Software Architectures 2016) ("Xu") describes uses of distributed ledgers executing smart contracts outside of cryptocurrencies, particularly uses as a software connector. Xu also discusses a platform that provides three main functions, including data trading, compliance checking, and data analytics, where the policy compliance and data checking are implemented as off-chain functionality. Xu also touches on the issue of untrusted nodes, and suggests introducing reputation and rating mechanisms to incentivize honesty. The entire disclosure of Xu is hereby incorporated by reference herein.

Embodiments of the present invention address the above-described problems and deficiencies in DL systems executing smart contracts, thereby improving the functioning of blockchain networks. For example, embodiments describe methods and systems enabling agents to secure their transactions by attaching policies to them. By ensuring that only a policy compliant transaction can alter a contract's state, security against policy violations which can be observed during execution is provided and much richer class of policies can be checked and more complicated policy violations can be detected. According to some embodiments, the policies are not hardcoded into a blockchain, which allows the users to have flexibility to specify their own hand-crafted policy.

According to some embodiments, an attached policy specifies requirements on the correct execution of the transaction. Example requirements may include, the absence of a smart contract when executing the transaction, the order in which the smart contracts are involved, or an invariant of a smart contract's state, but are not so limited. Only policy complaint transactions can alter the contracts' states. For example, in some embodiments, if a transaction's execution results in a policy violation, the changes to the states of the smart contracts involved in executing this transaction are reverted; otherwise, the resulting states are determined "as normal" by the smart contracts. In embodiments, this is ensured at runtime with minor modifications to the mining of blocks and the verification of the blockchain. According to some embodiments, this ability to conduct policy checks at runtime (in addition to or instead of checking prior to execution) amplifies the flexibility advantage of embodiments, thus enabling users to implement a very rich class of policies.

According to embodiments, the overhead for users implementing aspects of the present invention is small because it is a "lightweight" method to secure transactions. For example, users only need to specify and attach a policy to a transaction, while running a compliance checker in parallel to the smart contracts is computationally easy and done by miners of the blockchain. In other embodiments, for some policies (but not all), the users could analyze and verify the smart contracts offline (e.g., prior to execution by the Oyente tool) to check whether the involved smart contracts have certain properties. However, here the offline checking of policies is complementary to the online (e.g., runtime) checking. For example, many policies cannot be checked by offline verification tools (e.g., the Oyente tool).

Embodiments can be integrated in existing DL systems (e.g., blockchain systems) or be used as a basis for building a new DL systems. Additionally, embodiments can also implement all or any combination of the features discussed herein.

A feature of DL systems is that there no central authority to arbitrate the DL (e.g., verifying the validity of a transaction or vouching for the trustworthiness of an agent). Instead, DL systems are designed to reach a trustworthy consensus on the current states of the agents and smart contracts. Blockchains are used for this consensus purpose in some DL systems.

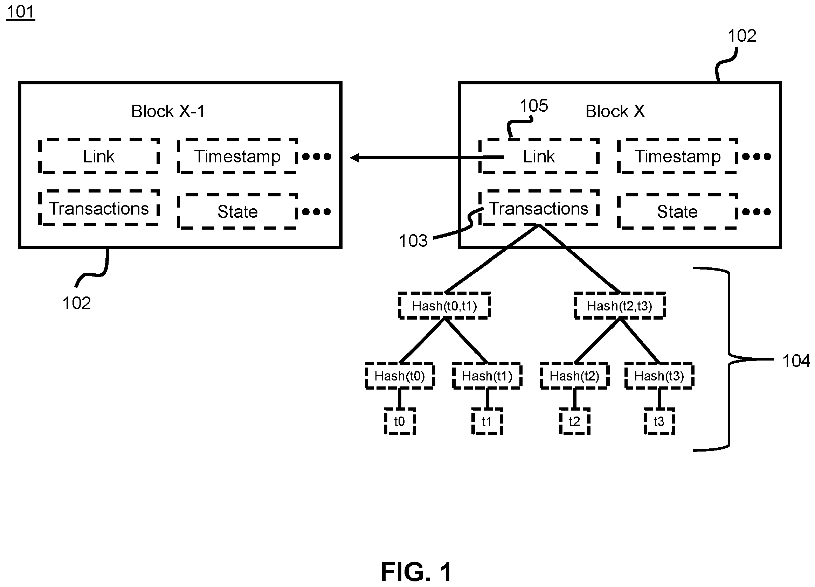

FIG. 1 illustrates a blockchain according to an embodiment. In a DL system utilizing blockchain technology, the DL is implemented with a blockchain 101, which includes one or more blocks 102. The blocks 102 may hold batches of executed transactions 103 that can be hashed and encoded into Merkle trees 104. Each block 102 may also include the cryptographic hash of the prior block (link 105), linking the two blocks (e.g., Block X and X-1) together and forming a chain starting from a genesis block (e.g., Block X-1). Furthermore, each block 102 may contain additional information like an identifier, a timestamp, cryptographic hashes of the agents' and contracts' states, etc. Cryptographic primitives may be used for checking the integrity of the various entities, for example, that a transaction is signed by the agent before submitting it.

In some DL systems, several blocks can link to the same predecessor block in a blockchain. This situation can arise when several new blocks are proposed at a similar time. Even if both blocks are correct, consensus should eventually be reached because one chain will become longer than the other one and the longest chain is the one that the (honest) nodes agree upon.

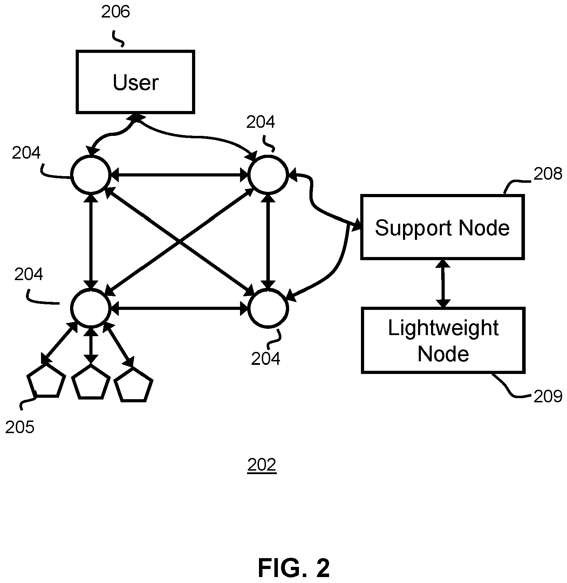

FIG. 2 illustrates a DL system 202 for exchanging DL data including a blockchain (e.g., blockchain 101) according to an embodiment. A DL system may include a peer-to-peer network of interconnected nodes. For example, the DL system 202 may include one or more DL nodes, such as full nodes 204. The full nodes 204 may build, maintain, and distribute a replicated digital ledger of an ordered sequence of transaction records (i.e., the DL). A specific consensus protocol may be executed by the full nodes 204 to ensure consistency, reliability and integrity of the ledger as new transactions are appended to it. The full nodes 204 may also execute smarts contracts. In a blockchain system, the DL nodes are blockchain nodes.

In addition to the full nodes 204, DL systems according to some embodiments, may include additional DL nodes, such one or more workers 205, users 206 (e.g., agents), support nodes 208, and lightweight nodes 209. The interconnection of the DL nodes provides a DL network. A DL network may be implemented using various network technologies, including the Internet and local area networks (LANs).

In some embodiments, the workers 205 each communicate directly with a full node 204. Depending on the implementation, the workers 205 may not directly send or receive data with the remainder of the DL system. Workers 205 may undertake tasks assigned by their associated full node 204. For example, in an embodiment where the full node 204 that is a parent node to the workers 205 is operating as a mining pool operator, the workers 205 may be assigned simplified tasks that contribute to executing the consensus protocol of the DL system. Here, the workers 205 are operating in a mining pool. In some embodiments, upon successful completion of a consensus protocol task, the workers 205 in the mining pool share in a reward.

The users 206 may be DL agents that provide new transactions proposed for incorporation into the DL and may provide an associated smart contract. According to some embodiments, the users 206 execute less than the entire DL protocol. For example, the DL users may only propose transactions for incorporation into the DL, but may not build or maintain the DL.

In some embodiments, lightweight nodes 209 having restricted (or limited) processing resources and may not fully participate in all DL protocol processes, but may be available to contribute to the processes or to propose new transactions for incorporation in to the DL. Here, a support node 208 serves as an intermediary between a lightweight node 209 and the remainder of the DL system 202. In some embodiments, the support node 208 has sufficient processing resources to perform DL protocol processes such as verifying or executing secure contracts.

In DL systems, DL nodes, which may be distributed in the DL system network, maintain a blockchain by mining and verifying its blocks. Some of the DL nodes may be malicious (or otherwise untrustworthy), but DL systems can withstand some malicious nodes. As long as a sufficient percentage of the DL nodes are honest, the correctness and trustworthiness of the DL can be guaranteed.

In some DL systems, the process of creating a new block and proposing it as an extension of the blockchain is called mining a block. Mining may include the selection of submitted transactions together with their executions. A DL node that performs a mining process is called a miner.

The mining of a block may include solving a cryptographic puzzle to make block creation computationally hard and thus costly. Is some DL systems, this aspect of mining is referred to as demonstrating a proof of work. The puzzle's solution may also be included in a block and its correctness can be checked quickly when verifying the block. Requiring and verifying a proof of work can mitigate malicious nodes from controlling or corrupting the blockchain.

In some DL systems, a miner is rewarded when the chain is extended with the proposed block. For example, the miner may be awarded a share of the fees attached to the submitted transactions by the agents. This rewards nodes that correctly mine and can also mitigate malicious agents from submitting bogus transactions.

DL nodes may also perform a process for verifying blocks. The verification of a block includes checking that one or more transactions (preferably all transactions) in the block have been executed correctly. For example, a verification process may include checking that states are correctly updated according to the given states, the transaction, and the involved smart contracts. When a DL node proposes a new block for extending the blockchain, other DL nodes verify the block and reach consensus on the block's correctness. When starting from a genesis block, a DL node can verify all transactions in the blockchain. A DL node that performs a verification process is called a verifier.

A DL node may be a miner and/or a verifier, depending on the DL node's current role in the DL system.

According to embodiments of the invention, a DL node operating as a blockchain agent (e.g., user 206) proposes a transaction to a DL system network (e.g., DL network 202). When proposing the transaction, the agent can include (e.g., attach) a transaction policy that specifies requirements on one or more smart contracts associated with executing the proposed transaction. Each smart contract can be a computer program that digitally facilitates, verifies, or enforces negotiation or performance of a transaction (e.g., a contract) between blockchain agents. In some embodiments, the proposed transaction can only alter the smart contract's states if it is compliant with the transaction policy, which can be ensured during block mining and block verification.

In some embodiments, the agent signs a transaction together with its associated transaction policy to ensure the integrity of the transaction and the associated transaction policy.

In some embodiments, a transaction policy may be given as a formula of a temporal logic, as a finite-state machine, or as a program in a domain-specific policy programming language. In some embodiments, a transaction policy does not alter values of the states in a blockchain, it only reads values from the states during the transaction's execution, where smart contracts update their states. However, in some embodiments a transaction policy can have its own local variables, which it updates.

Since additional work may be needed for checking the transaction policy, a system implementing a transaction policy check may include a cost associated with the check. For example, an additional fee may be owed by the agent to a miner if mining a transaction requires checking the transaction against a transaction policy compared to a transaction without such a requirement.

A DL system, according to some embodiments, includes a compliance checker, which is a component that determines whether a proposed transaction complies with its associated (e.g., attached) transaction policy. The compliance checker may be an application executed by a processor of a DL node. In some embodiments, a non-transitory computer readable medium includes a set of instructions that when executed by the processor cause the processor to perform the function of the compliance checker. The compliance checker component may be included in any DL node, such as one operating as a miner and/or verifier. In some embodiments, the compliance checker is included in a secure enclave of a DL node, which may be a trusted execution environment (TEE) (e.g., a TEE using INTEL software guard extensions (SGX).

A miner, in some embodiments, involves the compliance checker whenever it decides (e.g., executes an algorithm that results in such a determination) to include a transaction with an attached policy in a block. For example, during a transaction's execution, the miner can invoke its compliance checker component to check that each aspect of a transaction's execution complies with its attached transaction policy. By way of further illustration, a miner executing a contract may run the transaction's respective smart contracts, which may cause the smart contracts to update their states. Here, the miner can check policy compliance of these state updates using its compliance checker. In case of a policy violation, the states are reverted. Otherwise, the miner continues with the resulting states.

According to some embodiments, independent of whether the execution of the transaction was policy compliant or not, the transaction fees are payed.

In some embodiments, verifiers may also invoke a compliance checker for transactions with attached polices. In some embodiments, after conducting the compliance check, a verifier continues with its resulting state.

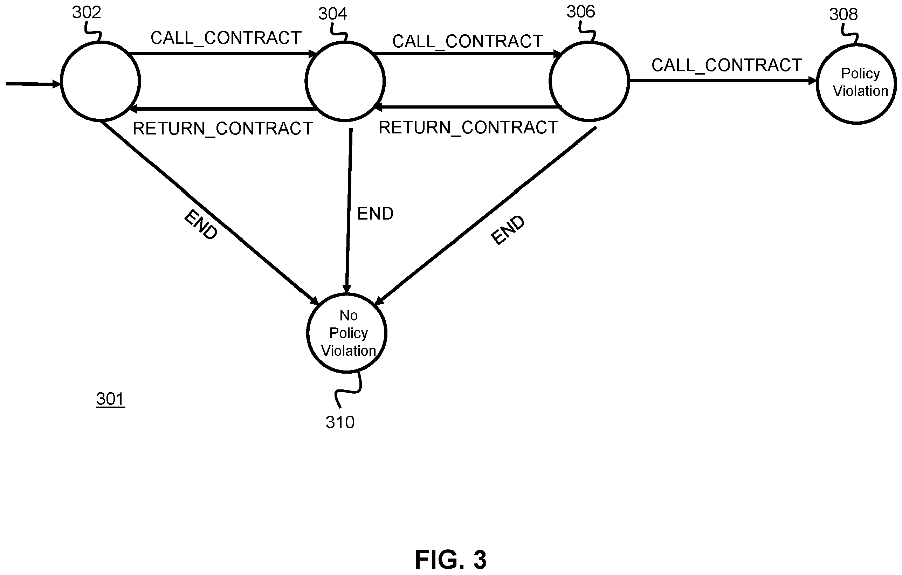

FIG. 3 illustrates a graphical representation of a finite-state machine for a transaction policy according to an embodiment. The transaction policy illustrated in FIG. 3 includes a requirement that the nesting of smart contracts should be at most two during the transaction's execution.

In the present embodiment, a transaction policy attached to a proposed transaction is configured as a state machine 301. In some embodiments, data sufficient for a node to implement the state machine 301 is included by the agent when submitting the transaction as part of the attached transaction policy. A DL node (e.g., a full node 204 operating as a miner) may implement the state machine 301 with its compliance checker component.

The state machine 301 includes five states (302, 304, 306, 308, and 310) associated with enforcing a transaction policy according to an embodiment.

The state machine 301 also includes events CALL_CONTRACT and RETURN_CONTRACT that mark the beginning and ending of invoking a smart contract. The event END marks the end of executing a transaction. According to this embodiment of state machine 301, other events do not result in a state change.

State 302 is entered after a transaction is received for execution by a DL node. Sate 302 represents a state where there are no smart contracts currently being executed. When executing the transaction, if a smart contract is invoked an event CALL_CONTRACT will be detected causing a transition to state 304.

State 304 represents a state where one smart contract is currently being executed. While in state 304, if the execution of a smart contract ends, an event RETURN_CONTRACT will be detected causing a transition back to state 302. However, if the transaction invokes another smart contract while in state 304, another CALL_CONTRACT event will be detected casing a transition to state 306.

State 306 represents a state where there are two open smart contracts, that is there are nested smart contracts. While in state 306, if the execution of a smart contract ends, an event RETURN_CONTRACT will be detected causing a transition back to state 304. However, if the transaction invokes another smart contract while in state 306, another CALL_CONTRACT event will be detected casing a transition to state 308.

State 308 represents a state where there are more than two nested contracts. According to the state machine 301 this is a violation of the transaction policy attached to the transaction. In some embodiments, if state 308 is entered, the transaction is undone. For example the states of agents associated with the transaction are reverted back to their prior states.

If the event END occurs (marking the completion of the execution of the transaction) while in any one of states 302, 304 or 306, state 310 is entered. State 310 represents the state were the transaction completed without violating the transaction policy. In some embodiments, when in this state the resulting states are incorporated into a block, which is attached to the blockchain.

According to embodiments, actual events may depend on the underlying execution engine of the blockchain platform. For example, for Ethereum the state machine events could be Ethereum Virtual Machine (EVM) commands with parameters that are matched against a current stack content. Furthermore, in some embodiments a textual representation, e.g. as guarded commands, may also be used. Guarded commands share some similarities to state machines, but instead of giving a policy as a finite-state machine (e.g., graphical notation), which is low level, policies can be given by other formalisms that are more high-level. Guarded commands are described further in Dijkstra, Edsger W., "EWD472: Guarded commands, non-determinacy and formal, derivation of programs" Commun. ACM 18:8: 453-457 (1975), the entire disclosure of which is hereby incorporated by reference herein. More generally speaking, embodiments of blockchain systems according to the present invention can support multiple domain-specific policy languages for specifying policies. Here, the miners' compliance checker would be configured to support these policy languages.

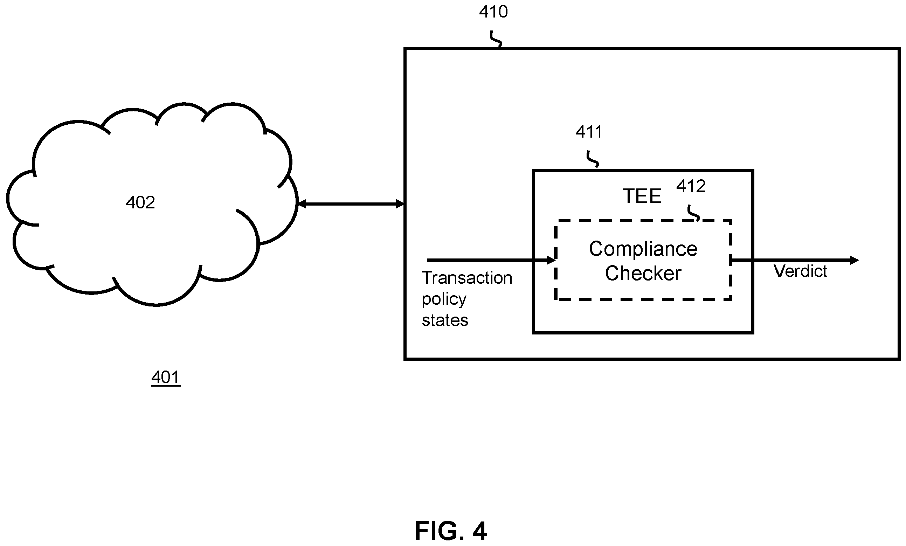

FIG.4 illustrates a DL system having a trustworthy component according to an embodiment. In FIG. 4, a DL system 401 includes a DL node 410 in communication with a DL network 402. The DL network 402 may be a peer-to-peer network for exchanging DL data (such as transactions with attached transaction policies and a blockchain) amongst the DL node 410 and other DL nodes. In a preferred embodiment, the DL node 410 can operate as a miner.

The DL node 410 includes a trustworthy component 411. In an embodiment, the trustworthy component 411 of the DL node 410 (e.g., a full node 204 operating as a miner) checks a policy attached to a transaction. In an embodiment, a policy compliance checker component 412 of the DL node 410 may be included in the trustworthy component 410 to perform this policy check.

In some embodiments, the trustworthy component 411 will generate a verdict corresponding to the result of the policy check. The DL node 410 may include the resulting verdict of the policy check in a block together with the transaction (e.g., when mining a new block for integration into the blockchain). By incorporating a policy check verdict generated by a trustworthy component into a block, the workload of other DL nodes operating as verifiers can be reduced. For example, during the verification of a block according this embodiment, it is sufficient for verifiers to check the correctness of the verdict for the transaction instead of rechecking policy compliance.

Cryptographic primitives may be used to ensure the authenticity and integrity of the policies and verdicts. For example, U.S. Patent No. 7,904,722, "Method for securely using digital signatures in a commercial cryptographic system" issued to Frank Sudia et al. ("Sudia") and U.S. Patent No. 7,698,230, "Transaction architecture utilizing transaction policy statements," issued to Bruce Brown et. Al ("Brown") describe using digital signatures and public and private keys to ensure authenticity and integrity in transactions. Sudia and Brown are incorporated by reference herein in their entirety. Cryptographic primitives may be based on a public-private key infrastructure, e.g., RSA. For example, every user may have two keys: a public one that is knowable by other users, and a private one that the user keeps secret. The agent may use its private key to sign a policy or verdict (without revealing the key) and by using the agent's public, others can check the signature.

Recall that agents can sign messages or parts thereof. These agent signatures can be checked by other DL nodes. For example, agents may use their private keys for signing messages and other DL nodes can use the agents' public key for checking the messages' integrity, including their authenticity. Similarly, the policy compliance checker component 412 of the DL node 410 can sign its verdict, and the verdict's integrity and authenticity can be checked by others.

In some embodiments, the trustworthy component 411 of the DL node 410 is a secure enclave such as a trusted execution environment (TEE). For example, miners may be equipped with a TEE in which they run their policy compliance checker component 412. A TEE is an isolated environment with strictly defined entry and exit mechanisms, provided by a processor. In some embodiments, INTEL processors or ARM processors may be used to implement the TEE. A TEE guarantees that code and data loaded inside the TEE will be protected with respect to confidentiality and integrity. The isolated instance of code running inside a TEE and its protected data is known as a trusted application. The compliance checker component 412 may be implemented as a trusted application.

According to some embodiments, the signature attached to the verdict is a private signing key that only exists in a TEE. The trusted application may also execute the step of providing a certificate by the TEE manufacturer that shows that the signing key belongs to a TEE.

In one embodiment, the compliance checker component 412 is implemented using the INTEL 64 instruction set and INTEL Software Guard Extensions (SGX). SGX is an implementation of a TEE by INTEL, available on Skylake and later central processing units (CPUs). SGX allows application to run in secure containers called enclaves with dedicated memory regions that are secured with on-chip memory encryption. Access to the encrypted memory is mediated by the hardware, effectively excluding the OS or any other software from the Trusted Computing Base (TCB).

Privileged code on the platform can create and add data to an enclave with instructions ECREATE, EADD, EINIT. After creation, the enclave code can only be invoked using a thin interface via instructions EENTER and ERESUME while enclave code can return by calling the EEXIT instruction to make sure that any sensitive information is flushed before control is given back to the OS.

In some embodiments, the DL node 410 may use INTEL SGX to run the compliance checker 412 in an SGX enclave.

In embodiments having the compliance checker component 412 running in a miner's TEE, the miner's TEE can sign the miner's policy check verdict. This ensures that the verifiers can trust the verdict.

For example, an agent may attach a policy to a transaction and transmit both over the DL network 402. A miner (e.g., a DL node 410) can then receive the policy and transaction, and send the transaction, the policy and the current states of a new block to its compliance checker component 412 instantiated in a TEE. The compliance checker component 412 may first check the signature and the integrity of the transaction and its attached policy. If this first check fails, the compliance checker component 412 can refute the transaction, and the miner (e.g., DL node 410) will not include it in the new block. If this check succeeds, the compliance checker component 412 executes the transaction, checks whether its execution is policy compliant, and outputs a signed verdict.

In case of a policy violation, the verdict can include the transaction, a hash of the provided starting states, and the violation. Otherwise, the verdict can include the transaction, and hashes of the starting states and the resulting states.

The miner (e.g., DL node 410) may then include the transaction (including the resulting states of the transaction) together with its verdict into the new block. As before, if a policy violation is determined, the resulting states are the starting states, and if no policy violation is detected, the resulting states are the ones that result from executing the transaction.

The verifiers (e.g., other DL nodes connected the DL network 402) may check transactions with policies by checking the correctness of the verdicts. This check can include determining whether the hashes of the states match. Because the verdicts are output by a trustworthy entity and are signed and include hashes of the starting and ending states (in case of no policy violation), the verifiers can trust the verdicts.

In some embodiments, to execute the transaction, the compliance checker component 412 includes a trustworthy module to run the smart contract that update states. This can, for example, be achieved by including such a module directly into the compliance checker's TEE. This may also be achieved by having the module running the smart contract and updating states in a separate TEE with a secure channel between it and the compliance checker's TEEs.

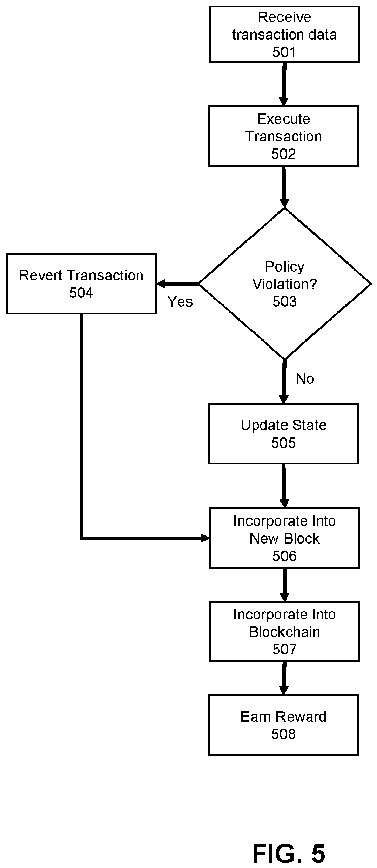

FIG. 5 illustrates a method for checking compliance of smart contracts in a blockchain according to an embodiment. The method of FIG. 5 may be performed by a DL node during execution of a transaction (e.g., mining).

In the method, a DL node receives transaction data (501), the transaction data including a transaction and its associated transaction policy. In some embodiments the transaction and its attached policy were received from an agent via the DL network, the agent having submitted the transaction and its attached policy for execution and inclusion in a DL. The agent may additionally add a reward for checking policy compliance. In some embodiments, the DL node is a full node 204 operating as a miner and the agent is a user 206.

The transaction may include one or more smart contracts and information on an initial state prior to executing the transaction. The initial state may include information on state of agents who are parties to the contracts (e.g., their initial assets) and state information for the smart contracts.

After receiving the transaction data, the DL node executes the transaction (502). According to some embodiments, the transaction is executed by applying the terms of one or more smart contracts using the initial state as an input. For example, a resulting state can be determined by applying the terms of the smart contracts to the initial state. The resulting state may include resulting agent states, for example data indicating that an asset has been deducted from a first agent's account and a corresponding asset has been added to a second agent's account. The execution step 502 does not itself directly cause the resulting state to be added to the DL.

The DL node also checks whether the transaction complies with the transaction policy (503). This policy violation check (503), may be done concurrently or consecutively with the execution operation (502).

If the transaction does not comply with the transaction policy (i.e., a policy violation is determined), the transaction is reverted (504). For example, the transaction may ultimately be included in the block, but it is the initial state (e.g., states of smart contracts and agents) that is included and not the resulting state determined by the execution operation (502).

If the transaction does comply with the transaction policy (i.e., no policy violation is determined), the transaction is allowed to execute as normal (505). That is, the transaction data to be incorporated in the DL will include the updated state data as determined by executing the transaction (i.e., the resulting state).

After determining whether to include the resulting state or the initial state in a new block of the blockchain, the DL node incorporates the appropriate state into the new block (506). For example, if the transaction complies with the transaction policy (503, 505), the resulting state is incorporated into the new block of the DL, but if the transaction does not comply with the transaction policy (503, 504), the initial state is incorporated into the new block. The new block may also include the transaction and the transaction policy. The new block can then be incorporated in to the blockchain (507). When verifying the new block on the blockchain, the DL node then operating as a verifier may check whether the transaction is compliant with its attached transaction policy compliant.

The DL node may earn a reward for verifying a transaction and mining the block (508).

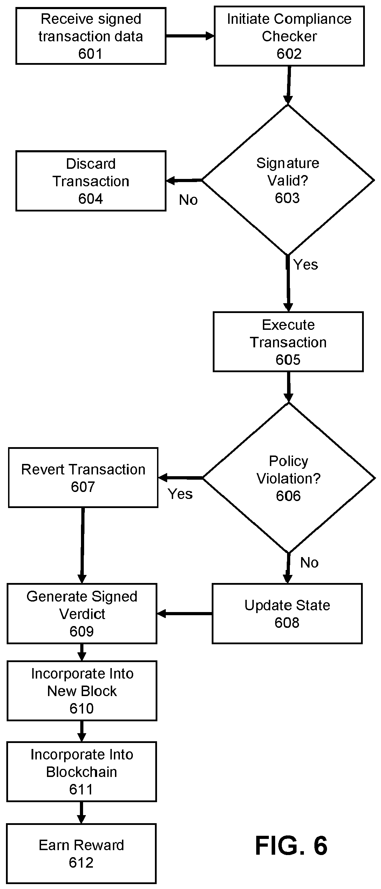

FIG. 6 illustrates a method for checking compliance of smart contracts in a blockchain according to an embodiment having a secure enclave. The method of FIG. 6 may be performed by a DL node during execution of a transaction (e.g., mining), and the secure enclave may be a TEE using SGX.

In this method, a DL node receives signed transaction data (601), the transaction data including a signed transaction and its associated transaction policy. In some embodiments the signed transaction and its attached policy were received from an agent via the DL network, the agent having submitted the signed transaction and its attached policy for execution and inclusion in a DL. The agent may additionally add a reward for checking policy compliance. In some embodiments, the DL node is a full node 204 operating as a miner and the agent is a user 206.

The signed transaction may include one or more smart contracts and information on an initial state prior to executing the transaction. The initial state may include information on state of agents who are parties to the contracts (e.g., their initial assets) and state information for the smart contracts.

After receiving the transaction data, the DL node initializes its compliance checker component, which includes passing the signed transaction (including the initial state), and the transaction policy (602).

The compliance checker determines whether a signature associated with the signed transaction is valid (603). If the compliance checker determines the signature is invalid, the signed transaction is discarded from the block (604). If the signature is determined to be valid, the method proceeds.

The compliance checker may also execute the signed transaction (605). According to some embodiments, the signed transaction is executed by applying the terms of one or more smart contracts using the initial state as an input. For example, a resulting state can be determined by applying the terms of the smart contracts to the initial state. The resulting state may include resulting agent states, for example data indicating that an asset has been deducted from a first agent's account and a corresponding asset has been added to a second agent's account. The execution step 605 does not itself directly cause the resulting state to be added to the DL.

The compliance checker may also check whether the signed transaction complies with the transaction policy (606). This policy violation check (606), may be done concurrently or consecutively with the execution operation (605).

If the signed transaction does not comply with the transaction policy (i.e., a policy violation is determined), the transaction is reverted (607). For example, the transaction may ultimately be included in the block, but it is the initial state (e.g., states of smart contracts and agents) that is included and not the resulting state determined by the execution operation (605).

If the signed transaction does comply with the transaction policy (i.e., no policy violation is determined), the signed transaction is allowed to execute as normal (608). That is, the signed transaction data to be incorporated in the DL will include the updated state data as determined by executing the transaction (i.e., the resulting state) (605).

After determining whether there is a policy violation, the compliance checker generates a signed verdict according to that determination (609). If the signed transaction complies with the transaction policy, the compliance checker component generates a signed verdict that includes the signed transaction and hashes of the initial state and the resulting state. If the signed transaction does not comply with the transaction policy, the compliance checker outputs the signed verdict that includes the signed transaction and the initial state (i.e., does not include the resulting state).

The DL node incorporates the signed verdict into a new block (610). The new block can then be incorporated in to the blockchain (611). When verifying the new block on the blockchain, the DL nodes operating as verifiers may check whether the signed verdict of the transaction is valid. According to embodiments, checking whether the signed verdict is valid amounts to a sufficiently reliable verification such that the verifiers do not need to independently verify that a transaction complies with its transaction policy. The verifiers trust that this has already been done due to the signed verdict. A verifier's compliance check may include checking the validity of the verdict's signature and/or whether the verdict's hashes match with the verifier's hashes.

The DL node may earn a reward for verifying a transaction and mining the block (612).

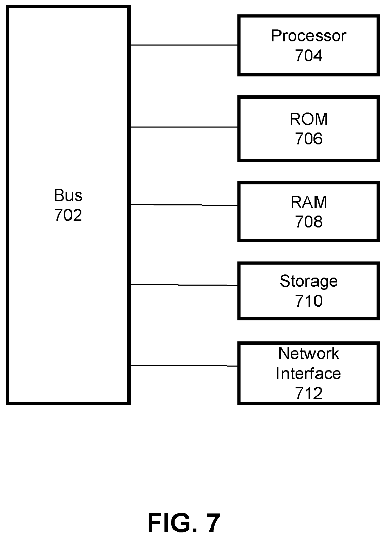

FIG. 7 is a block diagram of a processing system according to one embodiment. The processing can be used to implement the protocols, systems and nodes described above. The processing system includes a processor 704, such as a central processing unit (CPU) of the computing device or a dedicated special-purpose infotainment processor, executes computer executable instructions comprising embodiments of the system for performing the functions and methods described above. In embodiments, the computer executable instructions are locally stored and accessed from a non-transitory computer readable medium, such as storage 710, which may be a hard drive or flash drive. Read Only Memory (ROM) 706 includes computer executable instructions for initializing the processor 704, while the random-access memory (RAM) 708 is the main memory for loading and processing instructions executed by the processor 704. The network interface 712 may connect to a wired network or cellular network and to a local area network or wide area network, such as the Internet.

As discussed above, embodiments of the present invention provide for the attachment of policies to transactions, the correct execution of transactions, and policy compliance checks during block generation and verification. Furthermore, embodiments also provide that policy compliance only be checked when mining blocks; that is, the verification of blocks need not include checking policy compliance, but can sufficiently verify policy compliance by checking the signatures and hashes of policy verdicts produced when the block was mined.

Accordingly, embodiments provide agents with a mechanism for preventing unwanted effects of a transaction's execution because a transaction only has an effect if it complies with the policy attached to it. Further, because embodiments allow agents to specify policies (e.g., as arbitrary state machines), an agent can implement policies that cover a wide range of requirements that are not, for example, restricted a few finite policies that are fixed in advance or defined by the blockchain platform.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. Additionally, statements made herein characterizing the invention refer to an embodiment of the invention and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A method for enforcing policy compliance of a smart contract in a blockchain network, the method comprising:
receiving, by a blockchain node, a transaction and a transaction policy associated with the transaction, the transaction comprising the smart contract and a first state;
determining, by the blockchain node, a second state of the transaction based upon executing the transaction according to the smart contract and the first state; and
determining, by the blockchain node, whether the transaction complies with the transaction policy,
wherein if the transaction complies with the transaction policy, the second state is incorporated by the blockchain node into a new block of blockchain of the blockchain network, and if the transaction does not comply with the transaction policy, the first state is incorporated by the blockchain node into the new block.

2. The method according to claim 1, wherein the transaction includes a reward for checking policy compliance.

3. The method according to claim 2, the method further comprising receiving, by the blockchain node, the reward.

4. The method according to claim 2 or 3, wherein the reward comprises a fee for determining whether the transaction complies with the transaction policy.

5. The method according to any of claims 1 to 4, wherein the transaction policy was defined by a second blockchain node.

6. The method according to any of claims 1 to 5, the method further comprising:
receiving the blockchain including a first block, the first block including a first block transaction and a first block transaction policy associated with the first block transaction;
determining whether the first block transaction has been previously checked by a trusted blockchain node; and
based on determining that the first block transaction has not been previously checked by a trusted blockchain node, verifying that the first block transaction complies with the first block transaction policy.

7. The method according to any of claims 1 to 6, wherein at least one process of the method is performed by a compliance checker component of the blockchain node, the compliance checker component being executed in a trusted execution environment of the blockchain node.

8. The method according to claim 7, wherein the transaction is a signed transaction, the method further comprising:
receiving, by the compliance checker component, the signed transaction, the transaction policy, and the first state,
determining, by the compliance checker component, whether a signature associated with the signed transaction is valid, and
discarding, by the compliance checker component, the verified transaction based upon determining the signature associated with the signed transaction is invalid.

9. The method according to claim 7 or 8, wherein
if the signed transaction complies with the transaction policy, the compliance checker component outputs a signed verdict that includes the signed transaction and hashes of the first state and the second state, and if the signed transaction does not comply with the transaction policy, the compliance checker outputs the signed verdict that includes the signed transaction and the first state, and
the method further comprises incorporating, by the blockchain node, the signed verdict into the new block.

10. The method according to claim 9 further comprising:
receiving, the blockchain including a first block, the first block including a first block transaction having a signed verdict and a first block transaction policy associated with the first block transaction;
verifying whether the first block transaction complies with the first block transaction policy, and
verifying whether the signed verdict has valid hashes.

11. The method according to any of claims 1 to 10, wherein the blockchain node determines whether the transaction complies with the transaction policy while executing the transaction in runtime.

12. A blockchain node comprising one or more processors which, alone or in combination, are configured to provide for performance of the following steps:
receive a transaction and a transaction policy associated with the transaction, the transaction comprising a smart contract and a first state;
determine a second state of the transaction based upon executing the transaction according to the smart contract and the first state;
determine whether the transaction complies with the transaction policy,
incorporate the second state into a new block of a blockchain upon the transaction being determined to comply with the transaction policy, and
incorporate the first state into the new block upon the transaction being determined to not comply with the transaction policy.

13. The blockchain node according to claim 12, wherein the transaction includes a reward for checking policy compliance, and/or
configured to further provide the performance of the following steps:
receive the blockchain including a first block, the first block including a first block transaction and a first block transaction policy associated with the first block transaction; and
verify that the first block transaction complies with the first block transaction policy.

14. The blockchain node according to claim 12 or 13,
wherein the transaction is a signed transaction, and
wherein the one or more processors have a trusted execution environment and are configured to further provide the performance of the following steps:
receive the signed transaction, the transaction policy, and the first state,
determine whether a signature associated with the signed transaction is valid,
discard the verified transaction based upon determining the signature associated with the signed transaction is invalid,
output a signed verdict associated with the signed transaction, the signed verdict including the signed transaction and hashes of the first state and the second state if the signed transaction complies with the transaction policy and the signed verdict including the signed transaction and the first state if the signed transaction does not comply with the transaction policy, and
incorporate the signed verdict into the new block.

15. The blockchain node of claim 14, wherein the one or more processors are further configured to provide for following steps:
receive the blockchain including a first block, the first block including a first block transaction having a signed verdict and a first block transaction policy associated with the first block transaction;
verify whether the first block transaction complies with the first block transaction policy, and
verify whether the signed verdict has valid hashes.
